# EUROPÄISCHE PATENTSCHRIFT

(11) **EP 0 425 981 B1**
(45) Veröffentlichungstag und Bekanntmachung des Hinweises auf die Patenterteilung: **21.12.1994**
(21) Anmeldenummer: 90120304.2
(22) Anmeldetag: 23.10.1990
(51) Int. Cl.: B29C 45/27, H05B 3/48

(54) **Heisskanalblock**
Hot runner block
Bloc à canaux de chauffe

(30) Priorität: 27.10.1989 DE 3935856
(43) Veröffentlichungstag der Anmeldung: 08.05.1991
(73) Patentinhaber: SFR FORMENBAU DANGELMAIER GMBH, D-72764 Reutlingen (DE)
(72) Erfinder: Reinl, Horst, W-7417 Pfullingen (DE)
(74) Vertreter: Ostriga, Harald

(56) Entgegenhaltungen:
- EP-A- 0 262 490
- DE-A- 3 046 471
- FR-A- 2 167 674
- US-A- 2 036 788
- US-A- 3 110 796
- US-A- 3 275 801

## Beschreibung

Die Erfindung betrifft ein Spritzgießwerkzeug entsprechend dem Oberbegriff des Anspruchs 1.

Die gebräuchlichsten Beheizungs-Arten für Heißkanal-Blöcke sind in der Reihe "Technische Kunststoffe Berechnen-Gestalten-Anwenden C.2.1" der Hoechst Aktiengesellschaft D-6230 Frankfurt am Main 80, erschienen 1981 (s. dort Seiten 18 und 19) dargestellt.

Zur Beheizung eines Heißkanalblockes gelangen vornehmlich alternativ Heizpatronen oder Rohrheizkörper zur Anwendung.

Ein gewisser Vorteil von Heizpatronen besteht darin, daß diese lediglich in die Schmalseiten des Heißkanalblockes eingelassene Aufnahmebohrungen erfordern, in welche die Heizpatronen zur Erzielung eines hinreichenden Wärmedurchgangs bzw. Wärmeübergangs aber individuell genau eingesetzt werden müssen. Kreiszylindrische Heizpatronen und ihre korrespondierenden kreiszylindrischen Aufnahmebohrungen erfordern hierbei einen engen Schiebesitz (mindestens H 7).

Eine baulich verhältnismäßig aufwendige individuelle Anpassung besteht auch darin, daß eine Aufnahmebohrung, in ihrer Durchmesserebene mittig längsgeteilt, sowohl Bestandteil einer Klemmleiste als auch des Heißkanalblockes ist.

Um die individuellen Anpassungsarbeiten an den Aufnahmebohrungen zu vermeiden, ist man schließlich dazu übergegangen, gemäß der DE-PS 23 47 090 den Heizpatronenmantel und die entsprechende Aufnahmebohrung mit demselben Winkel konisch auszubilden, so daß eine satte Anlage der Heizpatronenmantelfläche an die Innenmantelfläche der Aufnahmebohrung zur Erzielung einer guten Wärmeübertragung vorhanden ist.

Für den Fall, daß ein Heißkanalblock wegen eines nur mit engen Temperaturtoleranzen zu verarbeitenden Kunststoffes besonders gleichmäßig beheizt werden muß, werden Rohrheizkörper verwendet, für welche an mindestens einer Breitfläche eines Heißkanalblocks eine Aufnahmenut eingelassen ist. Der Längsverlauf der Aufnahmenut folgt hierbei in etwa der Kontur des in seiner Grundform beispielsweise kreisförmigen, kreuzförmigen, H-förmigen oder T-förmigen Heißkanalblockes. Der Rohrheizkörper ist in der Aufnahmenut entweder mittels eines metallhaltigen Wärmeleitzements oder in aufwendiger Weise mittels einer Kupferlegierung eingegossen. Eine gleichmäßige Wärmeübertragung vom Rohrheizkörper auf den Heißkanalblock ist hierbei aber nur dann möglich, wenn sich über die Länge des Rohrheizkörpers keine Stör- bzw. Unstetigkeitsstellen im Übergang Rohrheizkörper/Wärmeleitzement bzw. Vergußmasse/Innenfläche der Aufnahmenut ergeben. Für den Fall, daß die Vergußmasse Lunker (Luftblasen) enthält, sind der Wärmedurchgang bzw. der Wärmeübergang an solchen Stellen beeinträchtigt. Es ist deshalb wichtig, daß z.B. Wärmeleitzement bei der Befestigung des Rohrheizkörpers schichtweise eingebracht wird, was eine langwierige Prozedur bedeutet, wie aus einer Verarbeitungsanleitung aus 4/81 der Firma G. Huetter, D-8990 Lindau, ersichtlich ist.

Bei unsachgemäßer Anwendung oder bei lange anhaltender Wärme-Wechselbelastung ist außerdem nicht auszuschließen, daß zwischen der Vergußmasse (z.B Wärmeleitzement) und der Aufnahmenut Spalten bzw. Abrisse entstehen, welche die Wärmeübertragung deutlich herabsetzen. Für den Fall, daß derartige Spalten oder Abrisse nur stellenweise auftreten, ist eine ungleichmäßige Wärmeübertragung die Folge.

Mit der Literaturstelle aus "Technische Kunststoffe ..." ist im wesentlichen vergleichbar mit die EP-A-0 262 490.

In der DE-A-3 046 471 ist eine Heißkanalspritzdüse für ein Kunststoffspritzgießwerkzeug beschrieben. Bei der bekannten Heißkanalspritzdüse wird ein elektrischer Rohrheizkörper mittels eines äußeren hohlzylindrischen Metallmantels in eine sich schraubenlinienförmig erstreckende düsenkörperseitige Außennut (mit etwa halbkreisförmigem Querschnitt) hineingepreßt. Hierbei ist die Weite der Schraubennut geringfügig kleiner als der Außendurchmesser des Rohrheizkörpers (s. S. 14 Abs. 3). Jene bekannte Lösung würde bei Anwendung auf einen Heißkanalblock zu einer sehr aufwendigen Bauweise führen.

Von der FR-A-2 167 674 ist es bekannt, für einen mit einem elektrischen Heizdraht ausgestatteten Rohrheizkörper ein doppellagiges Rohr zu verwenden, dessen Außenrohr aus rostfreiem Stahl und dessen Innenrohr aus Kupfer besteht. Ein ähnliches Zweilagenrohr aus unterschiedlichen Werkstoffen eines Rohrheizkörpers ist in der US-A-2 036 788 beschrieben.

Von der US-A-3 275 801 ist ein elektrischer Wärmetauscher bekannt, dessen aus Aluminiumguß bestehende Wärmetauscherplatte eine Aufnahmenut für einen Rohrheizkörper aufweist. Die Aufnahmenut besitzt einen sich etwa über 270° erstreckenden kreisförmigen Querschnitt, an welchen sich benachbart der Nutöffnung zwei ebene parallelwandige Flächenbereiche anschließen. Unterhalb der beiden parallelwandigen Flächenbereiche ist der Kreisquerschnitt zur Erzielung einer Hinterschneidung geringfügig ausgenommen, während der unverformte Rohrheizkörper in Nutgrund, der einen halbkreisförmigen Querschnitt aufweist, satt einliegt. Dieses hat beim Verpressen des Rohrheizkörpers einen zu geringen Verformungsweg zur Folge, was zwar zu einem Anschmiegen des Rohrheizkörpers an die Aufnahmenut, nicht aber zu einer Verdichtung der die Heizdrähte umgebenden Isolationsmittel-Füllung führt. Eine zu geringe Verdichtung der Isolationsmittel-Füllung hat jedoch bei Netzfrequenz regelmäßig ein schädliches Schwingen der Heizdrähte zur Folge.

Im übrigen wird gemäß der US-A-3 275 801 der Rohrheizkörper mit einem Hammerwerkzeug in die Aufnahmenut eingeschlagen, was zu einer mechanischen Überbeanspruchung der Heizdrähte führen kann.

Auch bei einer elektrischen Kochplatte gemäß der US-A-3 110 796 ist ein Rohrheizleiter in einer Aufnahmenut kreisförmigen Querschnittes satt aufgenommen. Zur Halterung des Rohrheizkörpers in der Aufnahmenut wird lediglich der obere Bereich der Aufnahmenut mittels eines Preßwerkzeuges von außen zugedrückt, so daß die beabsichtigte Verdichtung der Isolationsmittel-Füllung keinesfalls hinreicht.

Ausgehend von dem eingangs beschriebenen bekannten Spritzgießwerkzeug dieser Gattung (s.a.a.O. "Technische Kunststoffe.." Seite 19 linke Spalte Abs. 2 ff), liegt der Erfindung die Aufgabe zugrunde, den bekannten Heißkanalblock so auszugestalten, daß jeder Rohrheizkörper rasch und ohne zeitaufwendige Nacharbeit eingesetzt werden kann und darüber hinaus über seine gesamte Standzeit unverändert gute Wärmeübertragungseigenschaften gewährleistet.

Entsprechend der Erfindung wurde diese Aufgabe dadurch gelöst, daß der Rohrheizkörper innerhalb der Aufnahmenut verpreßt und seine hierbei verformte Rohrwand gegen die Nut-Innenfläche angeschmiegt und angepreßt gehalten ist.

Die verwendeten - an sich bekannten - Rohrheizkörper weisen regelmäßig einen kreisrunden oder abgeflacht elliptischen Rohrquerschnitt auf und bestehen aus rostfreiem Stahl. Der Innenraum des Rohrheizkörpers enthält innerhalb einer Magnesiumoxyd-Einbettung mindestens eine Heizwendel aus einem Heizleiter-Werkstoff. Das Magnesiumoxyd-Pulver ist verdichtet und distanziert auf diese Weise die Heizwendel von der Rohrkörper- Innenfläche.

Nachdem der Rohrheizkörper weitestgehend konfektioniert, d.h. dem Verlauf der heißkanalblockseitigen Aufnahmenut angepaßt und mit elektrischen Anschlüssen versehen, ist, wird der Rohrheizkörper in die Aufnahmenut eingelegt. Die Aufnahmenut weist gegenüber dem Raumbedarf des Rohrheizkörpers Übermaß auf. Der Rohrheizkörper wird nun - zweckmäßig mit einem mechanischen Druckwerkzeug - bildsam verformt und zugleich unter Querschnittsveränderung des Rohrkörpers innerhalb der Aufnahmenut verpreßt. Hierbei wird die verformte Rohrwand satt gegen die Innenfläche der Aufnahmenut gepreßt und angeschmiegt und in dieser angeschmiegten Position angepreßt gehalten, so daß eine optimale gleichmäßige Wärmeübertragung gewährleistet ist. Die Wärmeübertragung erfolgt hierbei unmittelbar von der Rohrwand zur Nutinnenfläche mit einem sehr hohen Wirkungsgrad, der im Vergleich zum Bekannten durch keinerlei Vergußmasse beeinträchtigt ist.

Der zum Verpressen des Rohrheizkörpers erforderliche Verformungsdruck wird gleichmäßig aufgebracht. Dieses kann z.B. mittels einer biegesteifen Preßplatte geschehen, welche eine hinsichtlich Längsverlauf und Öffnungsweite der Aufnahmenut weitestgehend analoge vorstehende Verformungsrippe aufweist.

Bei einem ca. 1000 mm langen Rohrheizkörper von 5 mm Durchmesser wurden gute Wärmeübertragungs-Ergebnisse bei einem Gesamtverformungsdruck von etwa 1000 kN erzielt.

Es ist weiterhin wichtig, daß der verformte Rohrheizkörper in seiner an die Nut-Innenfläche angeschmiegten Lage angepreßt gehalten ist.

Das Niederhalten des verpreßten Rohrheizkörpers in der an die Nut-Innenfläche angepreßt gehaltenen Lage geschieht entsprechend weiteren Erfindungsmerkmalen zweckmäßig dadurch, daß die Aufnahmenut hinterschnitten und der verpreßte Rohrheizkörper durch die Nut- Hinterschneidungsfläche gegen die Nut-Innenfläche angepreßt gehalten ist.

Dies geschieht entsprechend der Erfindung dadurch, daß sich an dem etwa halbkreisförmigen Querschnitt der Aufnahmenut zur Nutöffnung aufeinanderzu geneigte ebene Nutflächenbereiche anschließen, welche den verpreßten Rohrheizkörper in seiner an
die Nut-Innenfläche angeschmiegten Position halten.

Für gewisse Anwendungsfälle kann es zweckmäßig sein, wenn die Rohrwand von einem Innenrohr aus rostfreiem Stahl (an sich bekannt) und von einem das Innenrohr satt umschließenden Außenrohr aus Kupfer gebildet ist. Das kupferne Außenrohr wird vor der Konfektionierung des noch geraden Rohrheizkörpers auf letzteren aufgeschoben, worauf das so entstandene Doppelrohr entsprechend dem Verlauf der Aufnahmenut gebogen und die elektrischen Anschlüsse erstellt werden. Es erfolgt sodann das erfindungsgemäße Verpressen des Doppelrohres. Hierbei schmiegt sich das duktile Kupferrohr sowohl an die Außenwand des Innenrohrs als auch an die Innenfläche der Aufnahmenut an.

In weiterer Ausgestaltung der Erfindung kann es überdies zweckmäßig sein, daß die Nutöffnung begrenzende Werkstoffbereiche an im Abstand aufeinander folgenden Stellen, zum Rohrheizkörper hin gerichtet, dauernd verformt sind und diesen in seiner angepreßten Lage halten. Diese Verformungsstellen können etwa Einkerbungen bilden.

Die Erfindung befaßt sich außerdem mit einem Verfahren zur Herstellung eines Heißkanalblocks, wie es entsprechend dem Oberbegriff des Anspruchs 5 aus "Technische Kunststoffe..." ersichtlich ist. Mit dem erfindungsgemäßen Verfahren entsprechend dem Kennzeichenteil des Anspruchs 1 ist ein rasches und sicheres Verpressen des Rohrheizkörpers gewährleistet.

In den Zeichnungen ist ein bevorzugtes Ausführungsbeispiel entsprechend der Erfindung näher dargestellt, es zeigen:
Fig. 1 eine Draufsicht auf einen Heißkanalblock von im wesentlichen rechteckiger Grundform,
Fig. 2 eine Längsschnittansicht gemäß der abgeknickten Schnittlinie II-II in Fig. 1,
Fig. 3 einen verformten und in der heißkanalblockseitigen Aufnahmenut gehaltenen Rohrheizkörper in vergrößerter Darstellung entsprechend dem in Fig. 2 mit III bezeichneten eingekreisten Detail, und
Fig. 4 eine schematische Darstellung eines Rohrheizkörpers unmittelbar vor dem Verpressen.

In den Zeichnungen ist ein Heißkanalblock mit der Bezugsziffer 10 versehen. Der Heißkanalblock 10 besteht im wesentlichen aus einer Stahl- oder NE-Metallplatte 11 von etwa rechteckiger Grundform.

Der Heißkanalblock 10 enthält eine Angußbuchse 12 zur Aufnahme der nicht dargestellten maschinenseitigen Düse. Von der Angußbuchse 12 führen Verteilerkanäle 13, 14, 15 zu beheizten Hochleistungsdüsen 16, deren Düsenbereiche 17 jeweils an eine nicht dargestellte formplattenseitige Formhöhlung eines Spritzgießwerkzeuges anschließen.

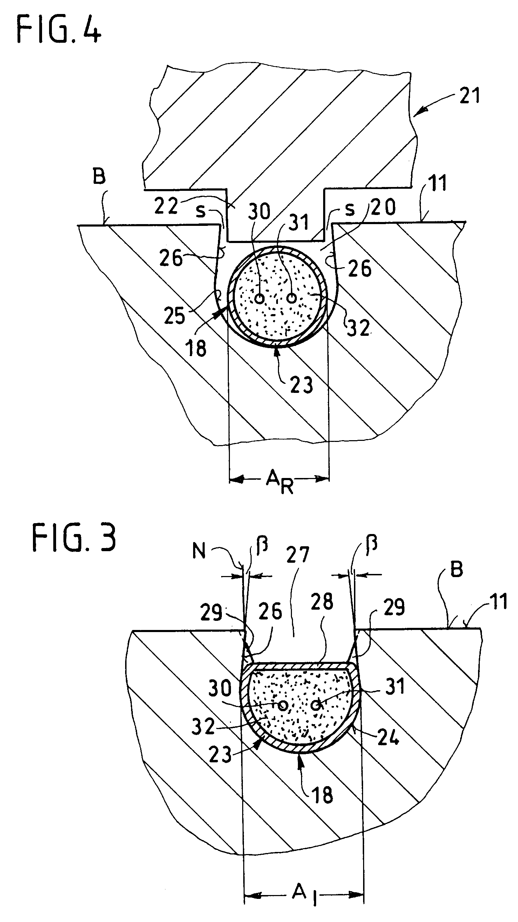

Ein Rohrheizkörper 18 mit elektrischen Anschlußeinheiten 19 ist in einer Aufnahmenut 20 in folgender Weise positioniert:
Wie aus Fig. 4 zu ersehen, besitzt die Aufnahmenut 20 gegenüber dem Raumbedarf des im unverformten Zustand zunächst einen kreisrunden Querschnitt aufweisenden Rohrheizkörpers 18 Übermaß. So beträgt beispielsweise der Außendurchmesser A_{R} des Rohrheizkörpers 5 mm, während der Innendurchmesser A_{I} der in ihrem Nutgrund halbkreisförmigen Aufnahmenut 20 5,8 mm ausmacht.

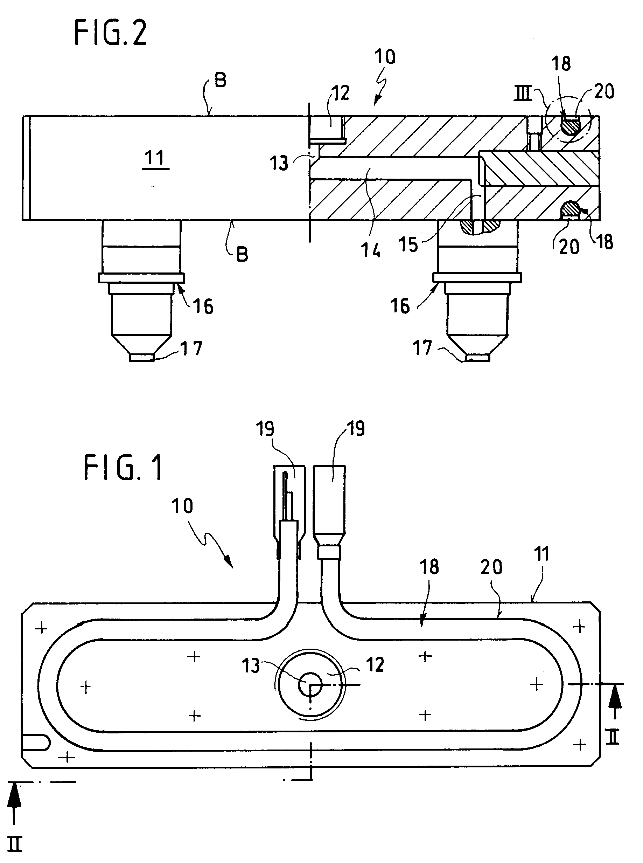

Eine am unteren Ende eines nicht dargestellten Preßstempels einer hydraulischen Presse vorgesehene Preßplatte 21 weist eine dem Längsverlauf (s. Fig. 1) der Aufnahmenut 20 angepaßte Preßrippe 22 auf, die mit beiderseitigem Spiel s in die Aufnahmenut 20 eintauchen kann und bei ihrem weiterem Niedergehen die Rohrwand 23 des Rohrheizkörpers 18 bildsam verformt.

Dies geschieht derart, daß sich ein Bereich 24 der Rohrwandaußenfläche satt gegen einen Bereich 25 der Innenfläche der Nut 18 anschmiegt.

Im Zusammenhang der Fig. 3 und 4 wird deutlich, daß sich beidseitig an den halbkreisförmigen Grundbereich der Aufnahmenut 20 mit dem Innendurchmesser A_{I} jeweils eine ebene Nutinnenfläche 26 anschließt. Beide Nutflächen 26 sind zur Nutöffnung 27 hin aufeinanderzu geneigt und bilden mit der Senkrechten N auf die Breitfläche B der Stahlplatte 11 einen Winkel β von im vorliegenden Fall 4,8°.

Die durch die Einwärtsneigung der ebenen Nut-Innenflächen 26 gebildete Hinterschneidung der Aufnahmenut 20 genügt, um den Rohrheizkörper 18, dessen nach oben weisender Bereich 28 durch die Verformung abgeplattet ist, sicher gegen die Nut-Innenfläche 25 angepreßt zu halten. Hierbei kann der dauernd verformte Rohrheizkörper 18 mit einem ihm verbliebenen elastischen Rückstellmaß gegen die ein Widerlager bildenden Hinterschneidungsflächen 26 drücken.

Einer zusätzlichen Anpreßhalterung dienen in Richtung auf den Rohrheizkörper 18 stellenweise etwa kerbenartig verformte Bereiche 29, welche von oben her etwa im Bereich der Abplattung 28 gegen den verformten Rohrheizkörper 18 drücken.

Der Rohrheizkörper 18 enthält eine Heizwendel 30, 31, die in Magnesiumoxyd-Pulver 32 eingebettet ist.

Mit der Verformung des Rohrheizkörpers vom Zustand gemäß Fig. 4 zum endgültigen Zustand gemäß Fig. 3 geht eine wesentliche zusätzliche Verdichtung der Magnesiumoxyd-Einbettung einher, so daß die Heizwendel 30, 31 bei verbesserter Wärmeübertragung zuverlässiger als bisher gegen durch Netzfrequenz eingeleitete schädliche Schwingungen geschützt sind.

Der Vollständigkeit halber sei noch erwähnt, daß Heißkanalblöcke 10 an einer Breitfläche B oder an beiden Breitflächen B mit je einer Aufnahmenut 20 oder mit mehreren Aufnahmenuten 20 mit korrespondierender Anzahl von Rohrheizkörpern 18 versehen sein können.

## Patentansprüche

1. Heißkanalblock (10) für ein Spritzgießwerkzeug zur Verarbeitung plastischer Massen, insbesondere für ein Kunststoff-Spritzgießwerkzeug, wobei der Heißkanalblock (10) zur Befestigung je eines Rohrheizkörpers (18) an mindestens einer Breitfläche (B) mindestens eine Aufnahmenut (20) aufweist, welche im Nutgrund einen etwa halbkreisförmigen Querschnitt besitzt, an den sich zur Nutöffnung (27) hin ebene Nut-Innenflächenbereiche (26) anschließen, wobei der etwa halbkreisförmige Querschnitt gegenüber dem Raumbedarf des unverformten Rohrheizkörpers (18) Übermaß aufweist, dadurch gekennzeichnet, daß der Rohrheizkörper (18) innerhalb der Aufnahmenut (20) verpreßt und seine hierbei verformte Rohrwand (23) mittels Nut-Hinterschneidungsflächen (26) an die Nut-Innenfläche (bei 25) angeschmiegt und angepreßt gehalten ist, wobei die Nut-Hinterschneidungsflächen von den ebenen Nut-Innenflächenbereichen (26) gebildet sind, welche zur Nutöffnung (27) hin aufeinanderzu geneigt (bei β) sind.

2. Heißkanalblock nach Anspruch 1 dadurch gekennzeichnet, daß die Nutöffnung (27) seitlich begrenzende Werkstoffbereiche (29) an im Abstand aufeinanderfolgenden Stellen, zum Rohrheizkörper (18) hin gerichtet, dauernd verformt sind und diesen in seiner angepreßten Lage halten.

3. Heißkanalblock nach einem der vorangehenden Ansprüche, dadurch gekennzeichnet, daß die Rohrwand von einem Innenrohr aus rostfreiem Stahl und von einem das Innenrohr satt umschließenden Außenrohr aus Kupfer gebildet ist.

4. Heißkanalblock nach einem der vorangehenden Ansprüche, dadurch gekennzeichnet, daß die ebenen Nut-Innenflächenbereiche (26) mit einer Senkrechten (N) auf der Breitfläche (B) einen Winkel (β) von 4,8° bilden.

5. Verfahren zur Herstellung eines Heißkanalblocks (10) nach den Ansprüchen 1 bis 3, gemäß welchem ein Rohrheizkörper (18) dem Verlauf einer heißkanalblockseitigen Aufnahmenut (20) angepaßt wird, der Rohrheizkörper (18) in die Aufnahmenut (20) eingelegt und dort befestigt wird, der Rohrheizkörper (18) mit mechanisch ausgeübtem Druck bildsam verformt und hierbei der Rohrheizkörper (18) unter Querschnittsveränderung innerhalb der Aufnahmenut (20) verpreßt wird, wobei der Verformungsdruck gleichmäßig mittels einer biegesteifen Preßplatte (21) auf den Rohrheizkörper (18) übertragen wird, wobei eine dem Längsverlauf der Aufnahmenut(20) angepaßte Preßrippe (22) mit beiderseitigem Spiel (s) in die Aufnahmenut (20) eingetaucht und der Rohrheizkörper (18) hierbei bildsam verformt wird.

## Claims

1. A hot runner unit (10) for an injection moulding tool for processing plastic compounds, particularly for a plastics injection moulding tool, wherein, on at least one wide surface (B), the hot runner unit (10) has at least one locating groove (20) for fixing a tubular heating element (18) in each case, said locating groove (20) being of approximately semicircular cross-section in the base of the groove, to which adjoin flat inner surface regions (26) of the groove, pointing inwards towards the groove opening (27), wherein the approximately semicircular cross-section is overdimensioned with respect to the spatial requirement of the non-deformed tubular heating element (18), characterised in that the tubular heating element (18) is press moulded inside the locating groove (20) and its thereby deformed tube wall (23) is moulded and held pressed down against the inner surface of the groove (at 25) by means of groove undercut surfaces (26), wherein the groove undercut surfaces are formed by the flat inner surface regions (26) of the groove which are inclined towards one another, inwards towards the groove opening (27) (at β).

2. A hot runner unit according to claim 1, characterised in that the regions of material (29), delimiting the groove opening (27) at the side, are directed inwards towards the tubular heating element (18) at points following one after another at intervals and hold said tubular heating element (18) in its pressed down position.

3. A hot runner unit according to one of the preceding claims, characterised in that the tube wall is formed by an inner tube made of stainless steel and by an outer tube made of copper, tightly enclosing the inner tube.

4. A hot runner unit according to one of the preceding claims, characterised in that the flat inner surface regions (26) of the groove form an angle (β) of 4.8 ° with a vertical (N) on the wide surface (B).

5. A method of producing a hot runner unit (10) according to claims 1 to 3, according to which a tubular heating element (18) is adapted to the course of a locating groove (20) on the hot runner unit side, the tubular heating element (18) is placed in the locating groove (20) and is fixed therein, the tubular heating element (18) is deformed in a plastic manner with mechanically exerted pressure and the tubular heating element (18) is thereby press moulded, with a change in cross-section, inside the locating groove (20), wherein the deformation pressure is evenly transmitted by means of a flexurally rigid press platen (21) to the tubular heating element (18), wherein a pressing rib (22), adapted to the longitudinal course of the locating groove (20), penetrates into the locating groove (20) with a clearance (s) on both sides and the tubular heating element (18) is thereby deformed in a plastic manner.

## Revendications

1. Bloc à canal (10) chauffant, pour un outil de moulage par injection destiné à mouler des masses plastiques, en particulier pour un outil de moulage par injection de matière plastique, le bloc à canal chaud (10) présentant, pour assurer la fixation de chaque corps chauffant tubulaire (18) sur au moins une face large (B), au moins une rainure de réception (20) ayant au fond de rainure une section transversale à peu près en demi-cercle, à laquelle se raccordent des zones de surface intérieure de rainure (26) planes, orientées vers l'ouverture de rainure (27), la section transversale à peu près en demi-cercle étant surdimensionnée par rapport au volume occupé par le corps chauffant tubulaire (18) non encore déformé,
caractérisé en ce que le corps chauffant tubulaire (18) est pressé à l'intérieur de la rainure de réception (20) et sa paroi tubulaire (23) alors déformée épouse la forme des faces de rainure (26) en contre-dépouille, en suivant (en 25) la face intérieure de rainure et est pressé, jusqu'à ce que toute la surface soit appliquée, les faces de rainure en contre-dépouille étant constituées par les zones de face intérieure de rainure (26) planes inclinées (en β) les unes vers les autres, en direction de l'ouverture de rainure (27).

2. Bloc à canal chaud selon la revendication 1,
caractérisé en ce que des zones de matériaux (29), délimitant latéralement l'ouverture de rainure (27), en des endroits se suivant de façon espacée, orientées en direction du corps chauffant tubulaire (18), sont soumises à une déformation permanente et maintiennent ces corps chauffants tubulaires (18) à leur position pressée sur toute la surface.

3. Bloc à canal chauffant selon l'une des revendications précédentes,
caractérisé en ce que la paroi tubulaire est constituée par un tube intérieur en acier inoxydable et un tube extérieur en cuivre, entourant le tube intérieur, avec contact sur toute sa surface.

4. Bloc à canal chaud selon l'une des revendications précédentes,
caractérisé en ce que les zones de face intérieure de rainure (26) planes forment un angle (β) de 4,8° par rapport à la perpendiculaire (N) à la face large (B).

5. Procédé de fabrication d'un bloc à canal chaud (10) selon les revendications 1 à 3,
selon lequel un corps tubulaire chauffant (18) est adapté à l'allure d'une rainure de réception (20) située du côté du bloc à canal chaud, le corps chauffant tubulaire (18) est inséré dans la rainure de réception (20) et y est fixé, le corps chauffant tubulaire (18) étant déformé plastiquement à l'aide d'une pression exercée mécaniquement et le corps chauffant tubulaire (18) étant alors comprimé à l'intérieur de la rainure de réception (20), ceci s'accompagnant d'une modification de sa section transversale, la présente déformation étant transmise simultanément au corps chauffant tubulaire (18) au moyen d'une plaque de pressage (21) rigide en flexion, une nervure de pressage (22), adaptée à l'allure longitudinale de la rainure de réception (20), pénétrant, avec un jeu (s) de part et d'autre, dans la rainure de réception (20) et le corps chauffant (18) étant alors déformé plastiquement.
